# EUROPÄISCHE PATENTSCHRIFT

(11) **EP 3 394 506 B1**
(45) Veröffentlichungstag und Bekanntmachung des Hinweises auf die Patenterteilung: **30.09.2020**
(21) Anmeldenummer: 16828741.5
(22) Anmeldetag: 23.12.2016
(51) Int. Cl.: F21V 8/00, F21V 33/00

(54) **PLATTENFÖRMIGES OPTISCHES ELEMENT ZUR AUSKOPPLUNG VON LICHT**
PLATE-SHAPED OPTICAL ELEMENT FOR COUPLING OUT LIGHT
ÉLÉMENT OPTIQUE EN FORME DE PLAQUE POUR LE DÉCOUPLAGE DE LUMIÈRE

(30) Priorität: 23.12.2015 DE 102015122768
(43) Veröffentlichungstag der Anmeldung: 31.10.2018
(73) Patentinhaber: temicon GmbH, 44263 Dortmund (DE)
(72) Erfinder: BOERNER, Volkmar, 79106 Freiburg (DE); HUMBACH, Oliver, Dr., 44388 Dortmund (DE)
(74) Vertreter: Kalkoff & Partner Patentanwälte PartmbB
(86) Internationale Anmeldenummer: PCT/EP2016/082575
(87) Internationale Veröffentlichungsnummer: WO 2017/109181

(56) Entgegenhaltungen:
- WO-A1-2009/073470
- GB-A- 2 432 428
- JP-A- 2006 128 072
- US-A- 6 011 602
- US-A1- 2013 307 420

## Beschreibung

Die Erfindung betrifft ein optisches Element. Insbesondere betrifft die Erfindung ein optisches Element mit einem transparenten, plattenförmigen Lichtleiter mit einer Oberflächenstruktur mit Erhebungen und/oder Vertiefungen zur Auskopplung von Licht.

Transparente, plattenförmige Lichtleiter mit einer Oberflächenstruktur zur Auskopplung von Licht sind an sich bekannt. Sie können dazu dienen, bspw. seitlich eingekoppeltes Licht innerhalb des Lichtleiters zu leiten und dieses dann an Erhebungen der Oberflächenstruktur auszukoppeln. So kann ein gewünschter flächiger Beleuchtungseffekt erzielt werden.

Die WO 2011/067719 A1 beschreibt ein Fensterelement, das in der Lage ist, Licht zu emittieren. Ein Lichtleiter ist dazu vorgesehen, das Licht einer Lichtquelle durch Totalreflexion zu leiten. Streustrukturen oder Auskoppelstrukturen sind auf der Oberfläche des Lichtleiters angebracht, um Licht aus dem Lichtleiter auszukoppeln. Die Auskoppelstrukturen sind zwischen dem Lichtleiter und einer Glasscheibe angeordnet, so dass zwischen den Erhebungen Bereiche zwischen dem Lichtleiter und der Glasscheibe gebildet sind, wo diese nicht in Kontakt sind. Die Auskoppelstrukturen können als Abstandhalter zwischen dem Lichtleiter und der Glasscheibe dienen. Eine weitere Glasscheibe kann an der gegenüberliegenden Seite des Lichtleiters vorgesehen sein.

Die DE 199 15 209 A1 beschreibt eine Vorrichtung zur Hinterleuchtung einer flächigen Anzeige mit einer Lichtleiterplatte, die auf einer Seitenfläche trapez- oder rechteckförmige Mikrostrukturen aufweist, während an der anderen Seitenfläche ein Reflektor angeordnet ist. Die Lichtleiterplatte besteht aus transparentem Material, vorzugsweise PMMA. An einer Schmalseite ist eine stabförmige Lichtquelle angeordnet, von der Licht in die Lichtleiterplatte eingekoppelt wird und sich unter Totalreflexion in der Lichtleiterplatte ausbreitet. Die trapez- oder rechteckförmigen Mikrostrukturen dienen zur Auskopplung des Lichts aus der Lichtleiterplatte. In einer Ausführungsform ist eine Sägezahnfolie an der Seitenfläche angeordnet, die an ihrer der Lichtleiterplatte zugewandten Seite eine Struktur aus Mikroprismen aufweist, die dazu dient, das von den recht- oder trapezförmigen Strukturen aus der Lichtleiterplatte ausgekoppelte Licht zu einer Anzeige hin umzulenken.

Die Druckschrift US 6,011,602 A offenbart eine Vorrichtung zum Hinterleuchten einer flächigen Anzeige mit einer Lichtleiterplatte, die auf einer Seitenfläche trapez- oder rechteckförmige Mikrostrukturen aufweist. Die Lichtleiterplatte besteht aus einem transparentem Material, vorzugsweise PMMA. An einer Schmalseite ist eine stabförmige Lichtquelle angeordnet, von der Licht in die Lichtleiterplatte eingekoppelt wird und sich unter Totalreflexion in der Lichtleiterplatte ausbreitet. Die trapez- oder rechteckförmigen Mikrostrukturen dienen zur Auskopplung des Lichts aus der Lichtleiterplatte. Oberhalb der Lichtleiterplatte ist eine transparente Platte mit einer Prismenstruktur auf der der Lichtleiterplatte zugewandten Seite angeordnet. Die Prismen haben dabei die Funktion, das aus der Lichtleiterplatte ausgekoppelte Licht gleichmäßig auf die Anzeige zu richten.

Die Druckschrift GB 2 432 428 A lehrt einen helligkeitsverstärkenden Film mit einer Lichtaustrittsoberfläche und mehreren Streifenprismen, die gegenüber der Lichtaustrittsoberfläche angeordnet sind. Die Streifenprismen sind parallel zueinander angeordnet und jedes Streifenprisma hat eine Lichteinfallskrümmungsoberfläche, eine Lichtreflexionsneigungsoberfläche und eine flache Oberfläche. Die Lichteinfallskrümmungsoberfläche ist jeweils zwischen einer Lichtreflexionsneigungsoberfläche und einer flachen Oberfläche angeordnet. Dabei sind die Oberflächen derart angeordnet, dass ein Lichtstrahl von der Lichteinfallskrümmungsoberfläche zu der Lichtaustrittsoberfläche durch die Lichtreflexionsneigungsoberflächen reflektiert wird. Dabei wird der helligkeitsverstärkende Film in einem Modul zur Hintergrundbeleuchtung eines Displays verwendet. Auf der Lichtaustrittsoberfläche kann eine Nanostruktur aus Erhebungen angeordnet sein, die eine Höhe von einigen Hundert Nanometern hat.

Es kann als eine Aufgabe der Erfindung angesehen werden, ein optisches Element vorzuschlagen, das einerseits zur Auskopplung von Licht dienen und andererseits als transparentes Element, bspw. für ein Fenster genutzt werden kann.

Diese Aufgabe wird gelöst durch ein optisches Element gemäß Anspruch 1. Abhängige Ansprüche beziehen sich auf vorteilhafte Ausführungsformen der Erfindung.

Erfindungsgemäß ist ein plattenförmiger Lichtleiter aus einem transparenten Material vorgesehen, bspw. aus Glas oder einem transparenten Kunststoff. Auf mindestens einer Seite des plattenförmigen Lichtleiters ist eine Oberflächenstruktur mit einer Anzahl von Erhebungen und Vertiefungen zur Auskopplung von Licht vorgesehen. Als Auskoppelstrukturen können dabei verschiedenste Formen von bspw. regelmäßig angeordneten oder stochastisch verteilten Erhebungen und Vertiefungen dienen, die dazu geeignet sind, Licht, das andernfalls der Totalreflexion an der Oberfläche unterliegen würde, aus dem Lichtleiter auszukoppeln.

Erfindungsgemäß ist parallel zum Lichtleiter eine transparente Deckplatte angeordnet, ebenfalls bspw. aus Glas oder einem transparenten Kunststoff. Die Deckplatte befindet sich in einem geringen Abstand zum Lichtleiter, so dass ein freier Bereich dazwischen gebildet ist. Bevorzugt ist der Abstand ausreichend groß, so dass die Lichtleitung und die Lichtauskopplung an der Oberflächenstruktur nicht wesentlich beeinflusst werden. Die Deckplatte dient zum Schutz der Oberflächenstruktur, bspw. vor Verschmutzung oder mechanischer Beschädigung.

Erfindungsgemäß ist mindestens auf der dem Lichtleiter zugewandten Oberfläche der Deckplatte und auf der der Deckplatte zugewandten Oberfläche des Lichtleiters eine reflexmindernde Nanostruktur mit einer Mehrzahl von Erhebungen und/oder Vertiefungen vorgesehen.

Hierdurch wird der Bildung von störenden Reflexen vorgebeugt. Diese spielen insbesondere bei der Verwendung des optischen Elements als transparentes Bauelement, bspw. als Fensterscheibe eine Rolle. Durch die reflexmindernde Nanostruktur auf beiden sich gegenüberliegenden Grenzflächen des zwischen der Deckplatte und dem Lichtleiter gebildeten Raums werden störende Reflexe erheblich vermindert und im Idealfall vollständig vermieden.

Zur Verwendung bspw. als Fensterscheibe ist das optische Element bevorzugt großflächig mit Kantenlängen von bspw. jeweils mehr als 10 cm, bevorzugt mehr als 30 cm. Dabei sind auch deutlich größere Maße von bspw. mehr als 100 cm Kantenlänge möglich.

Die reflexmindernde Nanostruktur sieht eine Modulation der Oberfläche vor, die beispielsweise regelmäßig oder auch stochastisch sein kann. Die so gebildete Nanostruktur wirkt breitbandig entspiegelnd. An einer Grenzfläche mit einer solchen Nanostruktur wirkt keine abrupte, sondern eine graduelle Brechzahländerung. Beispielsweise kann eine geeignete Nanostruktur aus Erhebungen und/oder Vertiefungen einer Höhe von 500 nm oder weniger gebildet werden. Bevorzugt sind Strukturhöhen von 150-400 nm. Die einzelnen Erhebungen weisen bevorzugt zueinander einen mittleren Abstand von 100-500 nm auf, weiter bevorzugt von 100-300 nm. Die Modulation der Oberfläche kann bspw. als Kreuzgitter oder Liniengitterstruktur geformt sein. Das Strukturprofil ist bevorzugt nicht rechteckig, sondern verrundet.

Erfindungsgemäß ist die reflexmindernde Nanostruktur sowohl auf der dem Lichtleiter zugewandten Oberfläche der Deckplatte als auch auf der der Deckplatte zugewandten Oberfläche des Lichtleiters vorgesehen. So wird eine besonders gute Unterdrückung von Reflexen an beiden Grenzflächen erreicht.

Erfindungsgemäß wird die Deckplatte durch eine Mehrzahl von über die Fläche verteilten Abstandhaltern in einem Abstand von dem Lichtleiter gehalten. Die Abstandhalter können bspw. eine Höhe von 2µm bis 2mm, bevorzugt 30 µm bis 1mm, besonders bevorzugt 50-300 µm aufweisen. Bevorzugt sind dabei kleine Abstandhalter einer Höhe von 200 µm oder weniger, weiter bevorzugt 100 µm oder weniger. Die Form der Abstandhalter kann beispielsweise zylindrisch, kegelförmig oder kegelstumpfförmig sein, mit verschiedenen Formen der jeweiligen Grundfläche, bspw. rechteckig, trapezförmig, rund, elliptisch, etc. Bevorzugt sind die Abstandhalter schmal ausgebildet, so dass das Verhältnis der Höhe zur maximalen Querabmessung 2:1 oder höher ist. Verschiedene Materialien kommen für die Abstandhalter in Frage, bspw. Lack oder thermoplastische Kunststoffe. Beispielsweise können sie einstückig mit dem Lichtleiter gebildet sein, bspw. im Kunststoff-Spritzgussverfahren. Ebenso können die Abstandhalter aber auch separat vom Material des Lichtleiters gebildet sein, bspw. als Lackschicht, insbesondere aus einem UV-härtbaren Lack.

Mit den bevorzugt über die Fläche verteilten Abstandhaltern wird erreicht, dass ein möglichst konstanter, bevorzugt sehr geringer Abstand zwischen dem Lichtleiter und der Deckplatte verbleibt. Durch den Abstand kann erreicht werden, dass die Deckplatte die Lichtleitung und Auskopplung von Licht an der Oberflächenstruktur nicht behindert, sondern hier weiter eine Grenzfläche zum zwischen der Deckplatte und dem Lichtleiter liegenden freien Bereich vorhanden ist, der bspw. luftgefüllt sein kann.

Erfindungsgemäß dienen die zur Lichtauskopplung vorgesehenen Erhebungen der Oberflächenstruktur dazu, die Deckplatte im Abstand vom Lichtleiter zu halten. In den Bereichen zwischen den einzelnen Erhebungen sind der Lichtleiter und die Deckplatte dabei nicht in Kontakt. Grundsätzlich können der Lichtleiter und die Deckplatte lose aneinander angeordnet oder aber stoffschlüssig aneinander festgelegt sein. Dabei kann es sinnvoll sein, das Winkelspektrum der Lichtverteilung im Lichtleiter anzupassen, um Übertritt von Licht in die Deckplatte minimal zu halten. Ein Übertritt von Licht in die Deckplatte ist zwar für die Funktionalität des optischen Elements nur wenig schädlich, da über die Kontaktflächen übertretendes Licht nicht abgelenkt wird und dadurch nicht über die nach außen weisende Seite der Deckplatte ausgekoppelt wird. Zu viel in der Deckplatte geführtes Licht kann jedoch dazu führen, dass etwaige Verschmutzungen auf der Oberfläche der Deckplatte stärker sichtbar werden, da über diese in der Deckplatte geführtes Licht ausgekoppelt werden kann.

Gemäß einer Weiterbildung der Erfindung kann die Auskoppelstruktur gebildet sein durch eine Oberflächenstruktur des Lichtleiters mit Erhebungen und Vertiefungen einer Höhe von bspw. 2-500 µm, bevorzugt bei 5 - 250µm. Erhebungen können dabei einstückig mit dem restlichen Material des Lichtleiters gebildet sein, bspw. durch eine Prägung der Oberfläche. Ebenso können die Erhebungen und Vertiefungen aber auch als bzw. in fest auf der Oberfläche des Lichtleiters angebrachten Elementen aus einem von dem Lichtleiter abweichenden Material gebildet sein, bspw. durch bzw. in einer auf der Oberfläche gebildeten strukturierten Lackschicht. Bevorzugte Werte für die Strukturhöhe der Oberflächenstruktur liegen bei 30-100 µm, besonders bevorzugt bei 40-80 µm. Die anteilige Flächenabdeckung der Erhebungen bzw. Vertiefungen der Auskoppelstruktur ist bezogen auf die Gesamtfläche des Lichtleiters bevorzugt gering und beträgt bspw. weniger als 5%, bevorzugt 2% oder weniger. Die Anordnung kann regelmäßig sein, ist aber bevorzugt stochastisch.

Während es möglich ist, dass die reflexmindernde Nanostruktur auf der Oberfläche des Lichtleiters nur zwischen den Erhebungen und Vertiefungen der Oberflächenstruktur vorgesehen ist, wird bevorzugt, dass die Nanostruktur auch auf den Erhebungen bzw. in den Vertiefungen vorhanden ist. So werden auch an diesen Stellen Reflexe vermieden.

Gemäß einer Weiterbildung der Erfindung kann im Kontaktbereich zwischen dem Lichtleiter und den Abstandhaltern eine Verspiegelung vorgesehen sein. Eine Verspiegelung kann bspw. durch eine Metallschicht erreicht werden. Durch die Verspiegelung kann sichergestellt werden, dass trotz des Kontakts mit dem Abstandhalter die Reflexionseigenschaften an der Oberfläche des Lichtleiters nicht verändert werden. Um die transparente Eigenschaft des Lichtleiters nur möglichst geringfügig zu beeinträchtigen, handelt es sich bevorzugt um eine punktweise, intermittierend angeordnete Verspiegelung, die nur im Bereich des Kontakts zwischen den Abstandhaltern und dem Lichtleiter vorgesehen ist, sowie gegebenenfalls leicht darüber hinausgehend.

Bei einer vorteilhaften Ausgestaltung der Erfindung ist im Kontaktbereich zwischen mindestens einem, bevorzugt allen Abstandhaltern und der Deckplatte eine Klebeschicht oder eine Aktivierung der Oberfläche vorgesehen, um eine feste Verbindung zwischen der Deckplatte und dem Lichtleiter herzustellen. Als Abstandhalter dienen dabei die Erhebungen der Oberflächenstruktur zur Auskopplung von Licht. Bei der Verklebung kann es sich grundsätzlich sowohl um einen punktuellen Auftrag eines Klebstoffs handeln, als auch um eine flächige Verklebung, insbesondere über die gesamte, an der Deckplatte anliegende Oberfläche einer Erhebung der Oberflächenstruktur zur Auskopplung von Licht. Eine Aktivierung der Oberflächen kann beispielsweise mittels Plasmabehandlung erfolgen, um eine besonders feste Verbindung zu erreichen.

Die optischen Elemente können eine lediglich einseitige Abdeckung mit einer transparenten Deckplatte aufweisen. Ebenso können optische Elemente mit beidseitig des Lichtleiters angeordneten Deckplatten vorgesehen sein, wobei dann die zur Auskopplung des Lichts dienende Oberflächenstruktur am Lichtleiter einseitig oder beidseitig vorgesehen sein kann.

Weiterhin kann auch beidseitig des Lichtleiters jeweils eine Oberflächenstruktur mit Erhebungen und Vertiefungen zur Auskopplung von Licht vorgesehen sein. Dabei ist bevorzugt auf oder über beiden Oberflächenstrukturen jeweils eine transparente Deckplatte angeordnet. Die Erhebungen zur Auskopplung auf beiden Seiten des Lichtleiters dienen als Abstandshalter für die beiden Deckplatten.

Nachfolgend werden Ausführungsformen der Erfindung anhand von Zeichnungen näher beschrieben. Dabei zeigen:
- Fig. 1: in schematischer perspektivischer Ansicht eine erste, nicht erfindungsgemässe Ausführungsform eines optischen Elements;
- Fig. 2: in schematischer Darstellung einen Querschnitt durch das optische Element aus Fig. 1;
- Fig. 3: in schematischer, vergrößerter Darstellung einen Teil der Oberfläche eines Lichtleiters des optischen Elements aus Fig. 1, Fig. 2 mit einer Nanostruktur;
- Fig. 4: eine schematische, vergrößerte Darstellung eines Querschnitts den Lichtleiter aus Fig. 1, Fig. 2;
- Fig. 5: in schematischer Darstellung einen Querschnitt durch eine zweite, erfinderische Ausführungsform eines optischen Elements mit Erhebungen zu Auskopplung als Abstandhalter;
- Fig. 6: in schematischer Darstellung einen Querschnitt durch eine dritte Ausführungsform eines optischen Elements mit einer Klebeschicht zwischen einer Deckplatte und den Abstandhaltern;
- Fig. 7: in schematischer Darstellung einen Querschnitt durch eine vierte Ausführungsform eines optischen Elements mit beidseitigen Erhebungen zur Auskopplung.

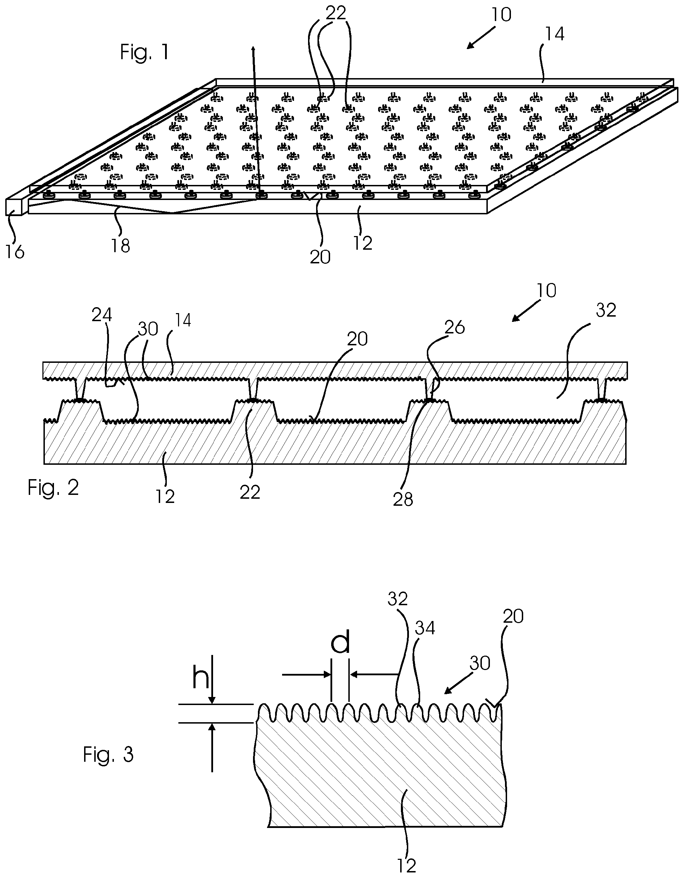

Fig. 1 zeigt schematisch eine nicht erfinderische Ausführungsform eines plattenförmigen optischen Elements 10. Dabei sind das optische Element 10 und seine Bestandteile in den Figuren 1-4 lediglich schematisch und insbesondere nicht maßstabsgerecht dargestellt.

Das in Fig. 1 gezeigte plattenförmige optische Element 10 ist eine Verbundplatte aus einem transparenten, plattenförmigen Lichtleiter 12 und einer parallel im Abstand hierzu angeordneten Deckplatte 14. Im hier dargestellten Beispiel besteht der Lichtleiter 12 aus PMMA als transparentem Kunststoff, während die Deckplatte 14 eine Glasplatte ist.

Mittels einer in Fig. 1 nur schematisch angedeuteten linienförmigen Lichtquelle 16 kann an einer Schmalseite des Plattenelements 10 Licht in den Lichtleiter 12 eingekoppelt werden, das, wie beispielhaft an einem Strahl 18 gezeigt, dort der Totalreflexion unterworfen und im Inneren des Materials des Lichtleiters 12 geleitet wird.

Auf der oberen, der Deckplatte 14 zugewandten Oberfläche 20 des Lichtleiters 12 sind wie in Fig. 1 gezeigt eine Anzahl von Erhebungen 22 gebildet, die eine Oberflächenstruktur zur Auskopplung von Licht aus dem Lichtleiter 12 bilden. Wie schematisch am Beispiel des Strahls 18 gezeigt, kommt es an den Erhebungen 22 der Oberflächenstruktur zur Auskopplung von Licht in Richtung quer zur Ebene des Plattenelements 10.

Das Plattenelement 10 ist in Dickenrichtung, d.h. quer zu seiner Ebene fast vollständig transparent, da es aus der transparenten Deckplatte und dem transparenten Lichtleiter gebildet ist, ohne dass ein Reflektor oder eine nicht transparente Schicht vorgesehen ist. Auch die Erhebungen 22 der Oberflächenstruktur des Lichtleiters 12 bestehen aus einem transparenten Material. Somit kann das plattenförmige optische Element 10 als transparente Scheibe verwendet werden, bspw. als Fensterscheibe.

Andererseits kann das optische Element 10 durch die beschriebene Oberflächenstruktur zur Auskopplung von Licht auch als flächige Lichtquelle verwendet werden. So kann bspw. ein Fenster geschaffen werden, das gleichzeitig als flächige Lichtquelle dient.

Figur 2 zeigt einen Querschnitt durch das optische Element 10. Wie dort dargestellt sind die Erhebungen 22 der Oberflächenstruktur im gezeigten Beispiel einstückig aus dem Material des Lichtleiters 12 ausgeformt, bspw. durch Prägung. Dabei ist die hier gezeigte Kegelstumpfform der Erhebungen 22 lediglich beispielhaft zu verstehen; auch anders geformte Erhebungen 22 können einer geeigneten Lichtauskopplung dienen.

Zwischen dem Lichtleiter 12 und der darüber angeordneten Deckplatte 14 ist ein freier Bereich 32 gebildet. Der Abstand wird dabei durch Abstandhalter 26 gebildet, die über die Fläche verteilt an der Unterseite der Deckplatte 14 angeordnet sind. Im gezeigten Beispiel setzen die Abstandhalter 26 jeweils auf den Erhöhungen 22 der Oberflächenstruktur des Lichtleiters 12 auf. Die Abstandhalter 26 sind im gezeigten Beispiel kegelstumpfförmig mit bspw. runder Grundfläche und schmal ausgebildet.

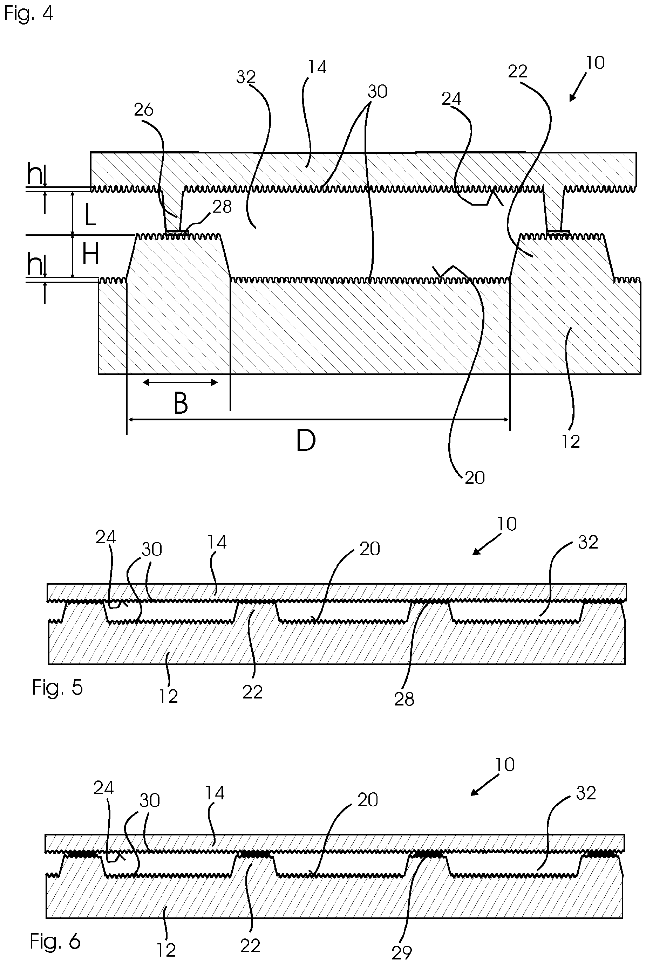

In Fig. 4 ist ein Teil der Querschnittsansicht Fig. 2 vergrößert dargestellt. Wie dort ersichtlich sind auf der Oberfläche des Lichtleiters 12, hier auf den Erhebungen 22, an den Stellen, an denen die Abstandhalter 26 aufgesetzt sind, jeweils punktförmige Verspiegelungen 28 durch Aufbringen dünner Metallschichten gebildet. Durch die Verspiegelungen 28 wird erreicht, dass es an der Kontaktstelle mit dem Abstandhalter 26 nicht zu einer ungewünschten Auskopplung von Licht kommt, sondern zu einer Reflexion von Licht, das von innerhalb des Materials des Lichtleiters 12 auf die Stelle trifft.

Wie in Fig. 4 dargestellt, weisen die Erhebungen 22 im gezeigten Beispiel eine Strukturhöhe H von bspw. 50 µm auf. Die einzelnen Erhebungen 22 sind wie dargestellt mit einer Periode D, d. h bspw. alle 100 µm oder auch nur alle 1000 µm angeordnet. Die Dichte der Erhebungen 22 (d.h. die anteilige Flächenabdeckung) kann bspw. im Mittel ca. 1% betragen, wobei allerdings die Verteilung bevorzugt nicht homogen ist, sondern zur Erzielung einer gleichmäßigen Lichtauskopplung eine höhere Dichte mit steigendem Abstand von der Lichtquelle 16 gewählt wird. Dabei kann die Strukturbreite B der einzelnen Erhebungen 22 bspw. 50 µm betragen. Die Abstandhalter 26 weisen eine Länge L auf von bspw. 100 µm.

An den beiden Grenzflächen 20, 24 beidseits des freien Bereichs 32 ist jeweils eine reflexmindernde Nanostruktur 30 gebildet. Im gezeigten Beispiel weist die gesamte Unterseite 24 der Deckplatte 14, bis auf die Abstandhalter 26, die Nanostruktur 30 auf. Auf der Oberfläche 20 des Lichtleiters 12 ist die Nanostruktur 30 ebenfalls gebildet, sowohl auf den Erhöhungen 22 als auch in den Bereichen zwischen den Erhöhungen 22.

Bei der reflexmindernden Nanostruktur 30, die in Fig. 3 schematisch näher gezeigt ist, handelt es sich um eine Subwellenlängen-Struktur, mit der eine breitbandige Entspiegelung erreicht wird. Diese besteht aus auf der jeweiligen Oberfläche gebildeten kleinen Erhebungen in Form von Nanosäulen 34. Im gezeigten Beispiel sind diese äquidistant mit einer Periode d von beispielsweise 200 nm. Die Nanosäulen 34 bilden ein verrundetes Profil einer Strukturhöhe h von bspw. 300 nm. Durch eine solche Nanostruktur, die auch als "Mottenaugen-Struktur" bekannt ist, wirkt die Begrenzung zwischen dem Material des Lichtleiters 12 und dem angrenzenden Bereich 32 nicht als Grenzfläche mit abrupter Brechzahländerung, an der es zur Reflexion kommt. Stattdessen ergibt sich eine graduelle Brechzahländerung, bei der Licht quer zur Oberfläche 20 weitgehend ohne Reflexionen transmittiert wird.

Durch die beidseitig des freien Bereiches 32 aufgebrachte Nanostruktur 30 wird so eine Reflexion und insbesondere eine mehrfache Reflexion stark verringert oder sogar vermieden, so dass der Aufbau des optischen Elements 10 als Verbundplatte dessen Transparenz und somit den Einsatz bspw. als Fensterscheibe nicht erheblich einschränkt.

Zur Herstellung des optischen Elements 10 und seiner Bestandteile können verschiedene Verfahren genutzt werden. Bspw. kann wie bereits erläutert die Struktur der Oberfläche 20 des Lichtleiters 12 mit den Erhebungen 22 durch Heißprägen mit einem entsprechenden Prägewerkzeug oder bspw. auch durch Spritzguss in hochtransparentem Kunststoff bspw. PMMA gebildet sein. Es ist auch möglich, die Erhebungen 22 durch Auftragen einer strukturierten Lackschicht auf der Oberfläche 20 zu erzeugen, was insbesondere für großflächige Plattenelemente 10 sinnvoll ist. Dabei kann auch die Nanostruktur 30 bereits in der Oberfläche des Prägewerkzeugs oder des Spritzgusswerkzeugs vorgesehen oder in der strukturierten Lackschicht gebildet sein, so dass sowohl die Nanostruktur 30 als auch die Erhebungen 22 in einem Arbeitsgang gebildet werden können. Zur Herstellung eines geeigneten Werkzeugs mit der geeigneten negativen Nanostruktur, bspw. eines Prägewerkzeugs, einer Spritzgussform oder einer Druckwalze für die Strukturierung einer Lackschicht kann bspw. Interferenztlithographie in einem Fotolack verwendet werden, wobei aus der im Lack erzielten Struktur bspw. durch Electroforming ein geeignetes Werkzeug gebildet werden kann.

Auch die Nanostruktur auf der Unterseite der Deckplatte 14 kann bspw. durch Prägen oder durch Auftrag einer nanostrukturierten Lackschicht erzeigt werden. Die Abstandhalter 26 können ebenso wie die Verspiegelungen 28 bspw. aufgedruckt werden.

In Fig. 5 ist eine erfinderische Ausführungsform eines optischen Elements 10 dargestellt, bei der die Erhebungen 22 zur Auskopplung von Licht als Abstandhalter für eine Deckplatte 14 dienen. Dabei ist die Deckplatte 14 lose anliegend an den Erhebungen 22 angeordnet. Zwischen der Deckplatte 14 und in den Zwischenräumen zwischen den Erhebungen 22 befindet jeweils ein freier Bereich 32 in dem die Deckplatte 14 und der Lichtleiter 12 berührungslos voneinander beabstandet sind. An den beiden Grenzflächen 20, 24 beidseits des freien Bereichs 32 ist jeweils eine reflexmindernde Nanostruktur 30 gebildet. Darüber hinaus kann die Nanostruktur 30 auch an einer oder beiden Grenzflächen 20, 24 im Bereich der Abstützung der Deckplatte 12 an den Erhebungen 22 gebildet sein.

Bei einer weiteren, in Fig. 6 dargestellten Ausführung eines optischen Elements 10 ist zwischen der Deckplatte 14 und dem Lichtleiter 12 im Bereich der Erhebungen 22 zur Auskopplung von Licht eine Klebeschicht 29 angeordnet, mittels der die Deckplatte 14 stoffschlüssig mit jeder der Erhebungen 22 verbunden ist.

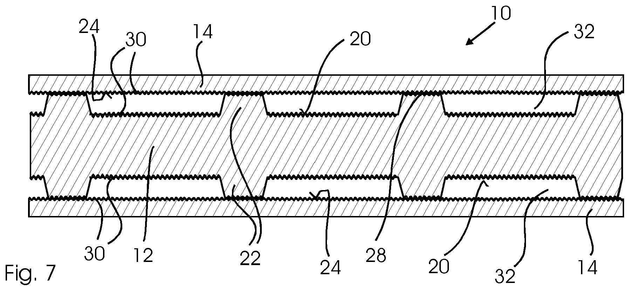

In Fig. 7 ist eine weitere Ausführung eines plattenförmigen, optischen Elements 10 dargestellt, bei der zusätzlich auf der Unterseite des Lichtleiters 12 ebenfalls eine Auskoppelstruktur mit Erhebungen 22 vorgesehen ist. Beidseitig des Lichtleiters 12 ist jeweils eine Deckplatte 14 an den Erhebungen 22 angeordnet, so dass eine Auskopplung von Licht zu beiden Seiten des optischen Elements 10 möglich ist und zugleich der Lichtleiter 12 beidseitig gegen eine Beschädigung geschützt ist.

Dabei sind die gezeigten Ausführungen lediglich beispielhaft und nicht beschränkend zu verstehen. Es sind Änderungen gegenüber den beispielhaft gezeigten Ausführungen möglich. Insbesondere die gezeigten Formen der Oberflächenstrukturen, sowohl der Nanostruktur 30 als auch der Auskoppelstruktur mit Erhebungen 22, sind lediglich beispielhaft zu verstehen, ebenso wie die dargestellte Form der Abstandhalter 26.

## Patentansprüche

1. Optisches Element, mit
- einem transparenten, plattenförmigen Lichtleiter (12) mit einer Oberflächenstruktur mit Erhebungen (22) und Vertiefungen zur Auskopplung von Licht,
- und einer transparenten Deckplatte (14), die parallel in einem Abstand zum Lichtleiter (12) angeordnet ist, wobei die Erhebungen (22) der Oberflächenstruktur zur Auskopplung von Licht als Abstandhalter dienen und die Deckplatte (14) auf den Erhebungen (22) der Oberflächenstruktur zur Auskopplung von Licht in einem Abstand von dem Lichtleiter (12) gehalten ist, **dadurch gekennzeichnet, dass**
- mindestens auf einer Oberfläche (24) der Deckplatte (14) und auf einer Oberfläche (29) des Lichtleiters (12) eine reflexmindernde Nanostruktur (30) mit einer Mehrzahl von Erhebungen und/oder Vertiefungen (34) vorgesehen ist, wobei
- die reflexmindernde Nanostruktur (30) mindestens auf der dem Lichtleiter (12) zugewandten Oberfläche (24) der Deckplatte (14) und auf der der Deckplatte (14) zugewandten Oberfläche (20) des Lichtleiters (12) vorgesehen ist.

2. Optisches Element gemäß Anspruch 1, bei dem
- die Erhebungen und/oder Vertiefungen (34) der Nanostruktur (30) eine Höhe von 500 nm oder weniger aufweisen.

3. Optisches Element gemäß Anspruch 1 oder 2, bei dem
- die Erhebungen und/oder Vertiefungen (34) der Nanostruktur (30) einen mittleren Abstand (d) von 100-500 nm aufweisen.

4. Optisches Element gemäß einem der vorangehenden Ansprüche, bei dem
- die Erhebungen und Vertiefungen (22) der Oberflächenstruktur des Lichtleiters (12) eine Höhe von 2- 500 µm aufweisen.

5. Optisches Element gemäß einem der vorangehenden Ansprüche, bei dem
- das Verhältnis der Höhe (L) zur maximalen Querabmessung der Abstandhalter (22) 2:1 oder höher ist.

6. Optisches Element gemäß einem der vorangehenden Ansprüche, bei dem
- im Kontaktbereich zwischen dem Lichtleiter (12) und mindestens einem Abstandhalter (22) eine Verspiegelung (28) vorgesehen ist.

7. Optisches Element gemäß einem der vorangehenden Ansprüche, bei dem
- die reflexmindernde Nanostruktur (30) auf Erhebungen (22) und/oder in Vertiefungen der Oberflächenstruktur des Lichtleiters (12) vorgesehen ist.

8. Optisches Element gemäß einem der vorangehenden Ansprüche, bei dem
- beidseits des Lichtleiters (12) jeweils transparente Deckplatten (14) vorgesehen sind.

9. Optisches Element gemäß einem der vorangehenden Ansprüche, bei dem
- im Kontaktbereich zwischen mindestens einem Abstandhalter (22) und der Deckplatte (14) eine Klebeschicht (29) oder eine Aktivierung der Oberfläche vorgesehen ist.

10. Optisches Element gemäß einem der vorangehenden Ansprüche, bei dem
- beidseitig des Lichtleiters (12) jeweils eine Oberflächenstruktur mit Erhebungen (22) und Vertiefungen zur Auskopplung von Licht vorgesehen ist.

## Claims

1. An optical element having
- a transparent, plate-shaped optical waveguide (12) with a surface structure having elevations (22) and depressions for coupling out light,
- and a transparent cover plate (14) that is disposed parallel at a distance to the optical waveguide (12),
wherein the elevations (22) of the surface structure for coupling out light serve as spacers and the cover plate (14) on the elevations (22) of the surface structure for coupling out light is held at a distance from the optical waveguide (12), **characterized in that**
- a reflection-reducing nanostructure (30) having a plurality of elevations and/or depressions (34) is provided at least on one surface (24) of the cover plate (14) and on one surface (29) of the optical waveguide (12), wherein
- the reflection-reducing nanostructure (30) is provided at least on the surface (24) of the cover plate (14) facing the optical waveguide (12) and on the surface (20) of the optical waveguide (12) facing the cover plate (14).

2. The optical element according to claim 1, in which
- the elevations and/or depressions (34) of the nanostructure (30) have a height of 500 nm or less.

3. The optical element according to claim 1 or 2, in which
- the elevations and/or depressions (34) of the nanostructure (30) have an average distance (d) of 100 - 500 nm.

4. The optical element according to one of the preceding claims, in which
- the elevations and depressions (22) of the surface structure of the optical waveguide (12) have a height of 2 - 500 µm.

5. The optical element according to one of the preceding claims, in which
- the ratio of the height (L) to the maximum lateral dimension of the spacers (22) is 2:1 or greater.

6. The optical element according to one of the preceding claims, in which
- a mirror coating (28) is provided in the contact region between the optical waveguide (12) and at least one spacer (22).

7. The optical element according to one of the preceding claims, in which
- the reflection-reducing nanostructure (30) is provided on elevations (22) and/or in depressions of the surface structure of the optical waveguide (12).

8. The optical element according to one of the preceding claims, in which
- transparent cover plates (14) are respectively provided on both sides of the optical waveguide (12).

9. The optical element according to one of the preceding claims, in which
- an adhesive layer (29) or an activation of the surface is provided in the contact region between at least one spacer (22) and the cover plate (14).

10. The optical element according to one of the preceding claims, in which
- a surface structure having elevations (22) and depressions for coupling out light is respectively provided on both sides of the optical waveguide (12).

## Revendications

1. Élément optique comprenant
- un guide de lumière (12) transparent en forme de plaque avec une structure de surface comprenant des bosses (22) et des creux pour le découplage de lumière,
- et une plaque de recouvrement (14) transparente, laquelle est disposée parallèlement à une distance du guide de lumière (12),
dans lequel les bosses (22) de la structure de surface pour le découplage de lumière servent d'espaceurs et la plaque de recouvrement (14) est maintenue sur les bosses (22) de la structure de surface pour le découplage de lumière à une distance du guide de lumière (12),
**caractérisé en ce que**
- une nanostructure anti-reflets (30) avec une pluralité de bosses et/ou de creux (34) est prévue au moins sur une surface (24) de la plaque de recouvrement (14) et sur une surface (29) du guide de lumière (12), dans lequel
- la nanostructure anti-reflets (30) est prévue au moins sur la surface (24) de la plaque de recouvrement (14) tournée vers le guide de lumière (12) et sur la surface (20) du guide de lumière (12) tournée vers la plaque de recouvrement (14).

2. Élément optique selon la revendication 1, dans lequel
- les bosses et/ou les creux (34) de la nanostructure (30) présentent une hauteur égale ou inférieure à 500 nm.

3. Élément optique selon la revendication 1 ou 2, dans lequel
- les bosses et/ou les creux (34) de la nanostructure (30) présentent un espacement moyen (d) de 100 à 500 nm.

4. Élément optique selon l'une des revendications précédentes, dans lequel
- les bosses et les creux (22) de la structure de surface du guide de lumière (12) présentent une hauteur de 2 à 500 µm.

5. Élément optique selon l'une des revendications précédentes, dans lequel
- le rapport de la hauteur (L) à la dimension transversale maximale des espaceurs (22) est égal ou supérieur à 2:1.

6. Élément optique selon l'une des revendications précédentes, dans lequel
- dans la région de contact entre le guide de lumière (12) et au moins un espaceur (22), il est prévu une couche réfléchissante (28).

7. Élément optique selon l'une des revendications précédentes, dans lequel
- la nanostructure anti-reflets (30) est prévue sur des bosses (22) et/ou des creux de la structure de surface du guide de lumière (12).

8. Élément optique selon l'une des revendications précédentes, dans lequel
- des plaques de recouvrement transparentes (14) sont respectivement prévues de part et d'autre du guide de lumière (12) .

9. Élément optique selon l'une des revendications précédentes, dans lequel
- dans la région de contact entre un espaceur (22) et la plaque de recouvrement (14), il est prévu une couche adhésive (29) ou une activation de la surface.

10. Élément optique selon l'une des revendications précédentes, dans lequel
- une structure de surface avec des bosses (22) et des creux est prévue respectivement de part et d'autre du guide de lumière (12) pour le découplage de lumière.
